# EUROPEAN PATENT APPLICATION

(11) **EP 1 696 641 A1**
(43) Date of publication of application: **30.08.2006**
(21) Application number: 06250835.3
(22) Date of filing: 16.02.2006
(51) Int. Cl.: H04M 1/253, H04M 1/725

(54) **Cordless telephone with display for interfacing with a soft-phone application running on a computer**

(30) Priority: 28.02.2005 US 656402 P
(71) Applicant: Ascalade Communications Inc., Richmond, BC V6W 1K7 (CA)
(72) Inventor: Cheng, Alex Chi Cheong, Richmond, British Columbia V7E 3B1 (CA); Yeung, Christina Wing Chi, Vancouver, British Columbia V5V 4Z3 (CA); Ho, Eric Sze Shun, Richmond, Britisch Columbia V7A 2C3 (CA)
(74) Representative: Legg, Cyrus James Grahame

(57) **Abstract**

A physical interface to a soft-phone application makes use of a cordless telephone handset with a display to allow a user to browse a contact list, initiate calls and receive Voice over Internet Protocol calls over a familiar interface without being tied to a stationary computer.

## Description

### FIELD OF THE INVENTION

The present invention relates generally to telephony handsets. More particularly, the present invention relates to a telephone handset for connection to a personal computer for interaction with Voice over IP software client, with an optional standard circuit switched telephony interface for bridging calls to the circuit switched telephone network.

### BACKGROUND OF THE INVENTION

Voice over Internet Protocol (VoIP) telephony is a rapidly expanding market, in which a number of companies are providing users with the ability to use a standard packet based Internet connection to place phone calls to both other VoIP customers and to users of the standard telephony network.

Many VoIP service providers make use of VoIP phones that contain networking hardware and connect to Ethernet networks, and are then connected to the Internet. These hardware solutions provide an interface that most users are familiar with, and allow simple dialing by number. However, these hardware solutions require that you make use of particular services that support the phone connection, many of which charge fees.

In another portion of the VoIP space, soft-phones are used to allow users to place phone calls. Soft-phones are applications executed on a personal computer and receives audio signals from a microphone connected to the personal computer. The soft-phone application digitizes the received audio signal and sends it over a VoIP network to the other party or parties in the call. Received audio is played over the computer's audio out. These applications are often used with headsets that acoustically isolate the microphone and speakers from each other to prevent feedback.

Soft-phone applications are often combined with contact lists (commonly referred to as buddy lists), that allow the soft-phone applications to initiate a call. Many of these applications have been integrated with instant messenger (IM) applications. As a result, a user can view a contact list and determine which contacts are presently online, and able to receive a VoIP call. If the contact information includes alternate calling numbers for a contact, a call can be initiated to an offline contact by switching to the public switched telephone network (PSTN) to complete the call.

Soft-phone applications are commonly used, as they provide low cost calling, but require that a user be physically near the computer running the application to use. In many homes, users are thus constricted to a single room if they want to use these applications. This reduces the utility of the application, as the user is bound to a single location for both making and receiving calls unless the user decides to carry a computer around. This is an inconvenience to many users. Additionally, many users are uncomfortable with the use of a headset for making telephone calls, as they are far more familiar with the standard telephone handset design.

It is, therefore, desirable to provide a system to allow users mobility while connected to a soft-phone application, which also provides the user with a comfortable interface.

### SUMMARY OF THE INVENTION

It is an object of the present invention to obviate or mitigate at least one of the foregoing disadvantages.

In a first aspect, the present invention provides an interface for soft phone applications as described below.

The present invention provides a wireless telephone styled handset that can be connected to a computer to interface with soft-phone applications. By using standard telephone wireless connections, such as in the 900 MHz, 2.4GHz or 5.8GHz bands using conventional protocol standards, for example the Worldwide Digital Cordless Telecommunications (WDCT) or Digital Enhanced Cordless Telephone (DECT) standards, a cordless telephone interface can be provided to the user. A wireless telephone handset communicates with a wireless base station that is coupled to an Internet interface device, such as a personal computer (PC), running a VoIP client, generally referred to as a soft-phone application. The internet interface device provides a platform to run a software interface, as for example, a plug-in or a device driver that facilitates interaction of the handset and base station with the PC soft-phone application. The base station connection to the personal computer uses a standard interface such as a universal serial bus (USB) connection, or a IEEE1394 connection commonly referred to as a Firewire (trade-mark) connection. One skilled in the art will appreciate that other standard and proprietary connections between the computer and base station as for example a wireless connection such as Bluetooth (trade-mark) can be used without departing from the scope of the present invention.

The handset is used for the audio input and output to place or receive a call using the soft-phone application. This allows mobiltity of the user, allowing the user to move away from the computer during the telephone call or to place or receive a call via the soft-phone application from any location while the handset is within range of the base station. It also addresses the interface issues that are common with soft-phone applications by providing users with an interface that is common and comfortable for many users. The base station need not be the full sized base station common for cordless telephones, and instead can be a small "dongle" device. In embodiments with small dongle devices as base stations, the handset component can be powered either with disposable batteries or can be powered by a rechargeable battery that is recharged using an external power supply. In embodiments with a fuller sized base station, the handset can be powered using either an external power supply or with power drawn from the computer connection over an interface such as a USB connection.

The handset of present invention incorporates a display that interacts with the soft-phone application to allow the user's contact list to be updated to maintain a current status and shown on the display. By using either alphabetic jumping, or simple directional inputs, the user can select a contact from the contact list, and initiate a call from the handset.

Additionally, a call-display-like feature shows the user information about someone who is placing an inbound call. The handset can be equipped to answer or decline inbound calls. By allowing the handset to interact with the soft-phone application to show the active contact list, to place calls to other users on the active contact list and to accept calls, the user is able to freely roam within the range of the cordless phone while maintaining a connection to the VoIP network. As a result, the user can make use of VoIP in place of communication over the Public Switched Telephone Network (PSTN) without many of the standard drawbacks of soft-phone applications.

In another embodiment of the present invention, the base station includes a PSTN connection in addition to the computer connection. The PSTN connection allows the handset to be used for both standard telephony and Internet telephony uses. Each contact in the list can have a preferred connection method, so that long distance contacts can first be attempted using a VoIP connection, and then by a PSTN connection if the VoIP connection fails. Alternatively, a user in the local calling area can be contacted using the PSTN connection, unless the PSTN connection is presently in use, in which case the connection will be attempted over the VoIP network.

The dual-line nature of the handset can allow further features to be enabled. Logic can be provided in the base station allowing incoming calls received from the VoIP network to be forwarded to a landline or cellular telephone number if the handset is turned off, or if the user has otherwise indicated that the forwarding should be enabled. This allows a user to accept VoIP calls and have them forwarded to a cellular number so that any long distance callers can make use of a VoIP connection and still connect to a PSTN phone number. Other advantages include the ability to forward calls to a number with an answering machine so that VoIP callers can leave a message for the user, and the ability to create a conference call bridging the VoIP and PSTN networks. The base station can be equipped with an answering machine, so that both the PSTN and VoIP callers can leave a message for the user at a single station.

The use of call forwarding can also be enabled from PSTN to the VoIP network, so that all incoming PSTN calls are directed to a single VoIP account, allowing the user to travel, and receive calls to a home phone number on remote computer systems. Call forwarding can be enabled selectively based on the party dialing in, so that either call display or other caller identification information can be used to determine whether the call will be forwarded, and if it is forwarded, which number it is forwarded to.

One skilled in the art will appreciate that the handset and base station communicate with the soft-phone application on the PC via a USB (or other) connection. The handset and base station are able to poll a soft-phone for both user status (online, busy, etc.) and contact lists. Both the status and the contact lists can be displayed on the handset. The handset can also be provided with the ability for a user to log out of the soft-phone application, and then log in as a separate user. For soft-phone applications that can be run as multiple instances on a single system, the handset can display the contacts of all the active users and optionally provides distinguishing marks to identify the different lists. In another embodiment, the different lists can be accessed separately. In a presently preferred embodiment, the telephone's graphic display is able to duplicate in whole or in part, the soft-phone interface on the PC. The handset is preferably able to extract only the audio data from the soft-phone and filter out other OS sounds or other application sounds.

The handset can be modeled to an operating system as an HID (Human Interface Device) between the user and a soft-phone. A quick key on the computer keyboard can be used to toggle the audio output/input between handset and PC to provide the user with greater control of the soft-phone application. If the handset includes the ability to store a phone directory or phone book, it can be synchronized with the soft-phone or other applications on the computer to maintain a consistent calling experience for the user, and incoming caller information can be stored on the phone, as it can be with other standard telephones. One skilled in the art will appreciate that dial tones and busy signals can be simulated for use of the VoIP network, to provide users with a seamless experience.

In one presently preferred embodiment, the product includes a cordless handset with screen (preferably a color screen), a base with a connection (such as a USB connection), and optionally a telephone line interface. The handset and base interact with software running on a PC such as a soft-phone application or a soft-phone application plugin. Examples of such soft-phone applications include Microsoft Messenger (trade-mark), Yahoo! Messenger (trade-mark) and Skype (trade-mark). Audio signals, "buddy list" updates, status and control signals are sent between the PC and the base station/dongle over the USB connection. The base station/dongle formats the appropriate information and sends it wirelessly to the handset for processing and display. Thus, the user is able to roam within the wireless range of the handset while maintaining the connection to the soft-phone application.

Other aspects and features of the present invention will become apparent to those ordinarily skilled in the art upon review of the following description of specific embodiments of the invention in conjunction with the accompanying figures.

Embodiments of the present invention will now be described, by way of example only, with reference to the attached Figures, wherein:

### BRIEF DESCRIPTION OF THE DRAWINGS

Figure 1 is an illustration of an embodiment of a handset and base station of the present invention;
Figure 2 is a functional block diagram of components in a preferred embodiment of an internet interface device of the present invention;
Figure 3 is a functional block diagram illustration components in a USB base station of the present invention;
Figure 4 is a functional block diagram illustrating the architecture of a handset of the present invention;
Figure 5 is a plan view of a preferred embodiment of a USB base station of the present invention;
Figure 6 is an elevation view of a preferred embodiment of a handset of the present invention;
Figure 7 is a schematic for components in a preferred embodiment of a USB base station of the present invention; and
Figure 8 is a schematic for components in a preferred embodiment of a handset constructed in accordance with the present invention.

### DETAILED DESCRIPTION

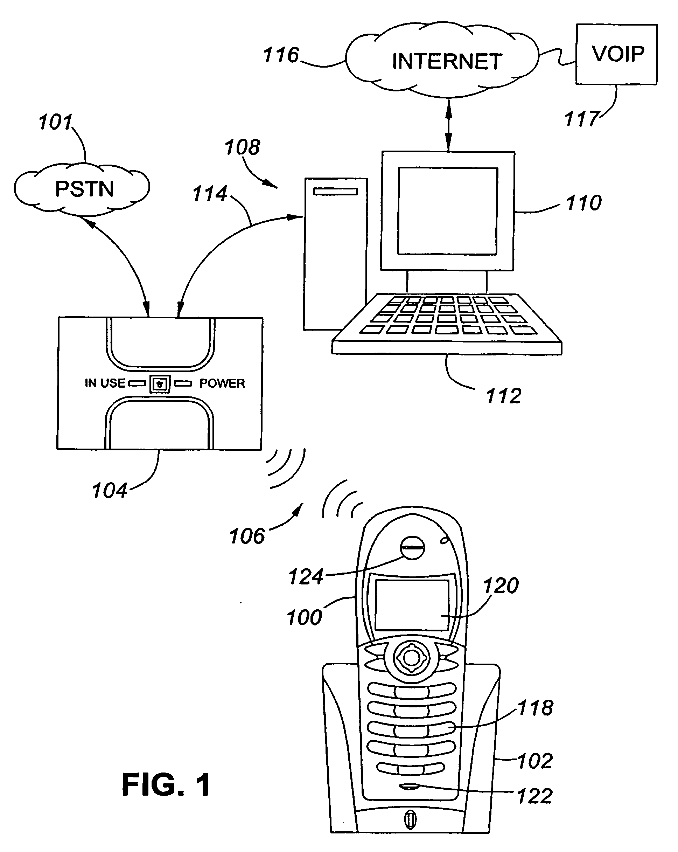

The preferred embodiments of the invention will now be described with reference to the attached drawings. Figure 1 shows a functional block diagram of elements of the invention including a wireless handset 100 cradled in a recharge station 102 where the wireless handset can be placed when not in use to recharge the batteries of the wireless handset. The wireless handset communicates with base station 104 over a wireless communications channel 106 using standard wireless connections in the 900 MHz, 2.4 or 5.8 Ghz bands using a suitable digital encoding protocol, for example, the Worldwide Digital Cordless Telecommunications (WDCT) or Digital Enhanced Cordless Telephone (DECT) standards for wireless telephone handset communications. The communications between the handset and base station over the wireless channel is bidirectional and includes both audio signaling as well as control and supervisory signaling to facilitate exchange of call control information and supervisory signalling between the handset and base station as well as audio communications delivered to and received from the user of the wireless handset 100. The base station 104 is coupled to an internet interface device 108 which is shown in the preferred embodiment as a separate personal computer (PC) computer having an output display 110, for example, a monitor and input devices 112 such as a keyboard. Communication between the base station 104 and the internet interface device 108 is effected by a wireline coupling 114 which is preferably over a standard interface such as a universal serial bus (USB) connection or an IEEE1394 connection which facilitates exchange of call control and supervision signaling between the handset and the base station and the internet interface device 108. In a preferred embodiment, the wireline coupling provides power to the base station 104 so a separate power supply or battery for the base station is not required. The internet interface device 108 provides a computing platform to operate a VoIP client to facilitate and effect VoIP communication over the internet 116**.** The internet interface device VoIP client can take one of several forms depending on the nature of the VoIP service provider 117 providing the VoIP service to the user of handset 100**.** Common VoIP services that are available which provide client software to operate on personal computers include Skype (trade-mark), MSN Messenger (trade-mark) and numerous others.

Wireless handset 100 provides a keypad 118 which includes a supervisory function keys as for example power on and off buttons, menu and select buttons as well as the dial number input buttons 0 through 9, octothorp and asterisk common to dual tone multifrequency (DTMF) touch tone telephones. In this manner a conventional handset is presented to a user to initiate and receive VoIP calls over the internet. The wireless handset also includes a graphical display 120 which provides the user with an output that can be configured and changed over time by the applications running on the wireless handset 100 under software control. For example, the display 120 may display a buddy list of Skype (trademark) users and their current status using a graphical display that corresponds to the buddy list that conventionally appears on the output display 110 of the personal computer when a user is operating a Skype (trademark) softphone client on the PC. The handset also includes a microphone 122 and earpiece 124 to allow the user to use the wireless handset in a conventional manner familiar to a telephone user.

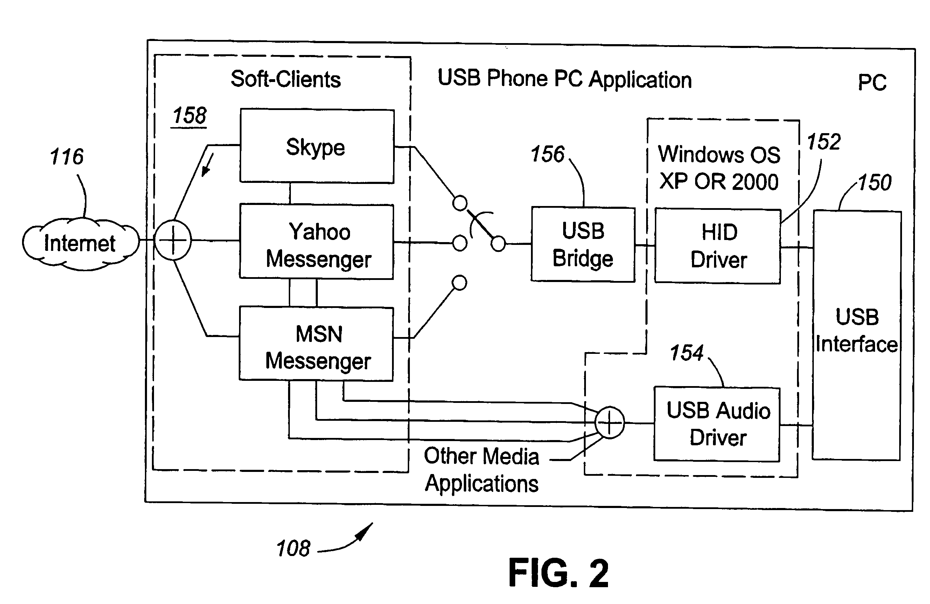

Figure 2 shows a functional block diagram of components of a preferred embodiment of a software application running on the internet interface device 108, which is embodied as a personal computer (PC). The PC includes a USB interface 150 which is used to supply power to and communicate over USB wireline coupling 114 of Figure 1. The PC runs an operation system program, such as a version of the Windows (trade-mark) operating system provided by Microsoft (trademark), for example, Windows 2000 (trademark) or Windows XP (trademark). The operating system provides a framework to establish and operate software providing driver functionality to interact with the USB interface 150 including a human interface device driver (HID) 152 as well as bidirectional USB audio driver 154. A USB bridge application 156 controls the USB interface 150 interaction with one or more VoIP soft clients 158 where Skype (trademark), Yahoo Messenger (trademark) and MS Messenger (trademark) are shown by way of example in the figure. The softphone clients 158 control and facilitate communication over the internet 116 with a VoIP service provider 117 to initiate and receive messages or calls to and from other users of the VoIP service corresponding to the selected softphone client operating on the PC internet interface device.

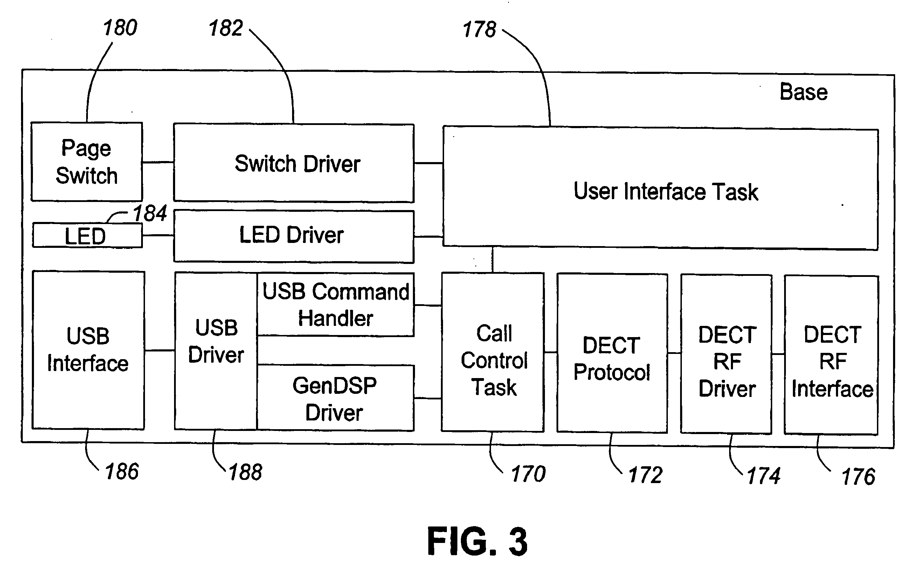

Figure 3 shows a functional block diagram of components of a software application operable on a computer processor provided in base station 104 to control and support the functionality of the base station in effecting communications between the internet interface device 108 and the wireless handset 100. The base station runs a call control task 170 that controls and coordinates the operation of the base station elements. A series of radio frequency (RF) functions 172, 174 and 176 support the particular protocol driver mechanism and RF interface required by the selected wireless media that is the wireless channel 106, used for communications between the base and the handset. In the specific embodiment shown in Figure 3, the European DECT standard is shown as implemented by means of a DECT protocol software function or application 172, a DECT RF software function or driver 174 and a DECT RF interface device 176. Those skilled in the art will appreciate that other wireless protocols can be implemented by providing suitable functionality in a comparable application and interface device as, for example, a digital spread spectrum (DSS) application and interface operable on a 900 MHz or 2.4 or 5. 8 GHz communications channel media. A user interface task 178 communicates with the call control task to provide user functionality at the base 104. For example, the base preferably includes a page switch 180 which can be manipulated by user to cause the handset to emit an audible signal to allow the handset to be located. The page switch is monitored by a switch driver application 182 to relay the page switch position to the user interface task 178. Similarly, the base preferably includes an in-use indicator 184 in the form of a light emitting diode (LED) which the call control task 170 operates to indicate visually on the base whether the handset is in use or not. A wireline interface 186 is provided to connect to the wireline coupling 114 connecting the base to the internet interface device.

In the preferred embodiment, the wireline interface 186 is a universal serial bus (USB) interface as that permits the base to receive power from the internet interface device 108 as well as effect bidirectional communications between the internet interface device and the base of both the audio signaling that allows user communication using the VoIP protocol over the internet as well as facilitate handling of call control signaling such as off hook, on hook and ring tone, dial tone functionality or exchange of buddy list updates with the soft phone client application running on the internet interface device. The wireline interface 186 is controlled by handler and driver applications 188 which are tailored to and written for the specific media of the wireline coupling which extends between the base and the internet interface device. In the specific embodiment shown in Figure 3, USB drivers and command handlers are provided to control the behavior of the USB type or wireline interface 186.

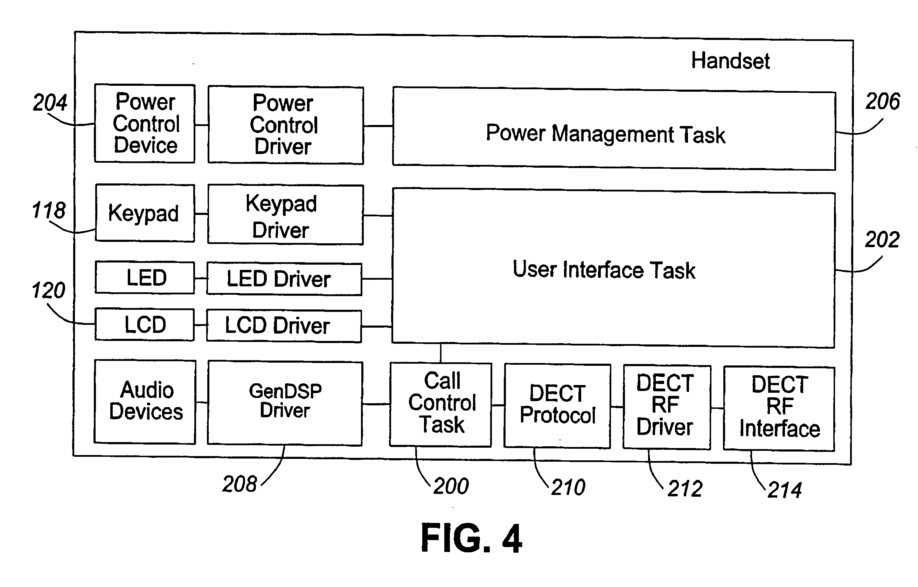

Figure 4 shows a functional block diagram illustrating the architecture of a handset of the present invention including function blocks for the applications running on a computer system of the wireless handset 100. The handset has a call control task 200 that coordinates the user manipulation of the handset as well as the communications between the base and handset over the wireless channel 106 as depicted in Figure 1. The handset includes a user interface task 202 that coordinates the information provided to the user on the handset graphical display 120 which is a liquid crystal display (LCD) by communication between the user interface task and the LCD driver. User manipulation of the handset keypad 118 is communicated with user interface task by means of associated keypad driver. In this manner user input to the handset and user output from the handset on the keypad and LCD is coordinated at the handset. The handset is powered by a battery in the preferred embodiment and a power control device 204 provides the necessary electrical coupling between the recharge station 102 and the batteries held within the handset itself. To control changing of the batteries and provide an indication of the charge level of the batteries to the user, a power management task 206 is preferably included as a software application on the handset. Audio communication to the microphone and earpiece of the handset is controlled by a general digital signal processing driver (GDSP) 208 which controls and supports the audio signaling over the handset. The RF signaling between the base and handset is supported by series of RF applications 210, 212 and 214. In the particular embodiments shown in Figure 4, the DECT protocol is implemented by means of a DECT protocol application 210 a DECT RF driver application 212 which controls signaling over the DECT RF interface 214.

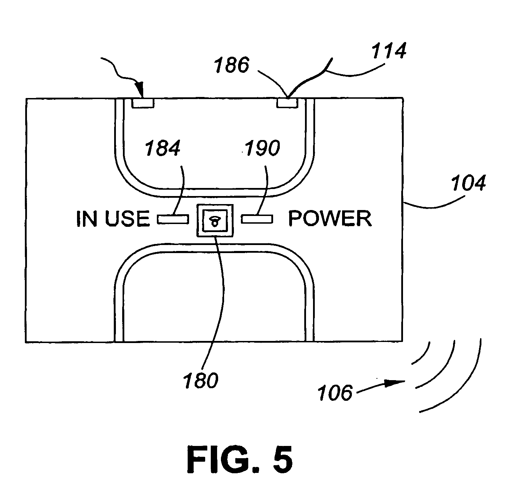

Figure 5 is a top plan view of an embodiment of the base 104. The base includes antenna equipment to support communications over the wireless channel 106 as well as a wireline connector 186 to interface with the wireline coupling 114. Indicator lights such as the in use light 184 and base power indicator 220 are preferably provided on the base station.

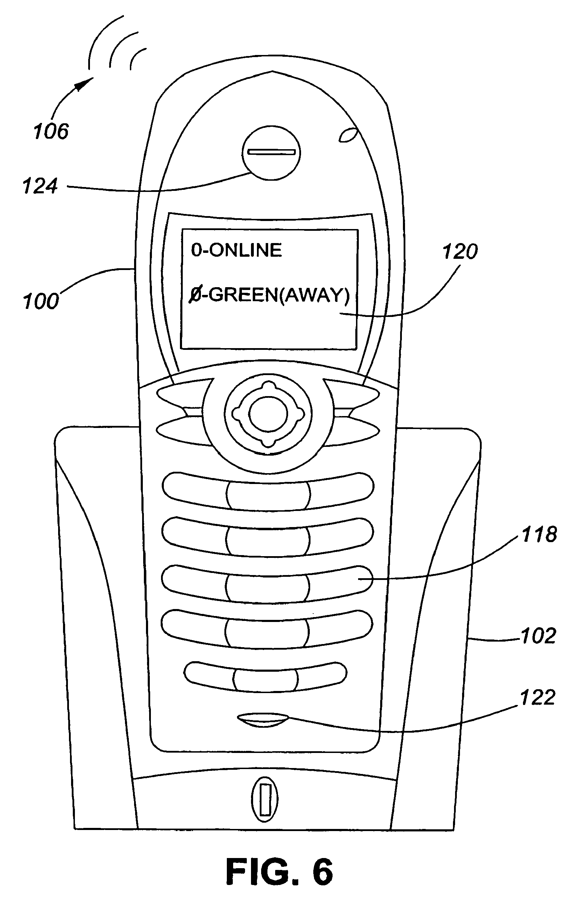

Figure 6 shows an elevation view of a preferred embodiment of a wireless handset 100 constructed in accordance with the principals of the invention. The handset includes an antenna to couple to wireless channel 106 which allows audio and control information to be exchanged between the handset and base station 104. The graphic display 120 includes a visual indication of the status of the buddy list or other users of the VoIP application that the user is running. For example, the user handset is shown as in the online state in the display and an example buddy "Green (away)" is shown in the display area of 120. As will be understood by those skilled in the art, the graphical display 120 provides a general color display device which is configurable to show graphical elements or text characters in whatever manner desired by the application developers of the VoIP services and the interface functionality of the handset 100. Therefore, the example discussed here is merely representative of one form of information that is capable of display on the graphical display 120 of the handset.

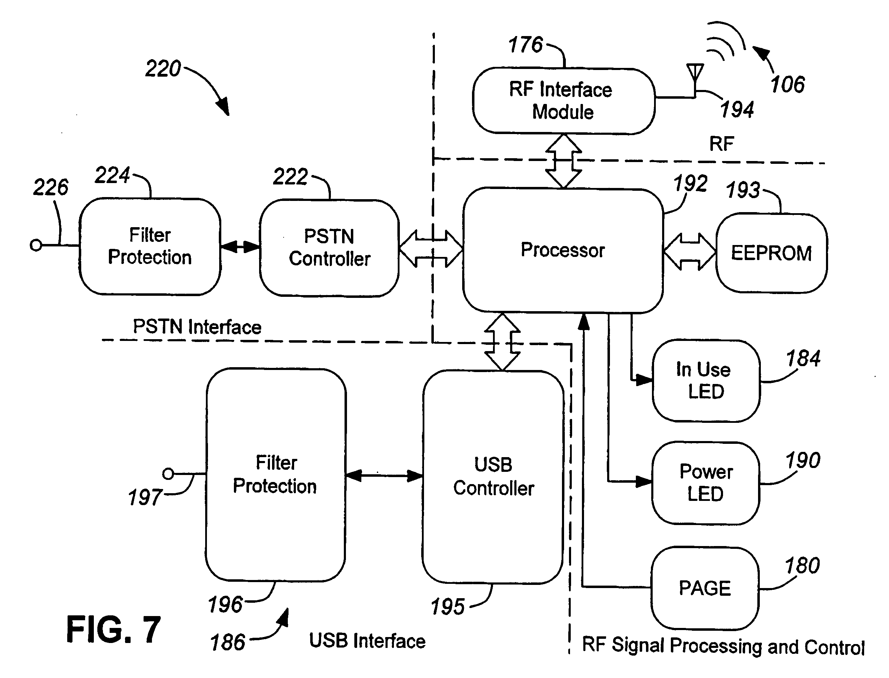

Figure 7 is a functional block diagram of the hardware elements included in the preferred embodiment of the base station. The base station has a base band processor 192 computing device and memory device 194 to store the software applications that control the base as described more fully with reference to Figure 3. The processor 192 has outputs to activate the in use LED 184 and power LED 190 as well as receive input from the page switch 180. The processor communicates with the RF interface module 176 and controls the operation of the RF interface using the protocol driver and internet interface applications 172, 174 and 176 referred to in the discussion made with reference to Figure 3. An antenna 194 couples the RF interface module to the wireless channel 106. A USB interface 186 has a USB controller 186 in communication with processor 192 to exchange control and communications signaling between the processor and the USB interface. The USB controller 195 passes the signaling to a filter protection device 196 which prevents external impulses such as power spikes, static electricity and the like from interfering with or destroying the integrated circuit elements of the base. A connector 197 completes a connection between the base and the wireline coupling 114 referred to in Figure 1.

A PSTN interface 220 includes a PSTN controller 222,in communication with processor 192. PSTN controller provides the data terminal equipment (DTE) to couple the base to the public switched telephone network (PSTN) 101. The PSTN controller is coupled to the public switched telephone network 101 through a filter protector 224 which insulates the base device from voltage spikes or static electricity that may be present on the PSTN connector 226.

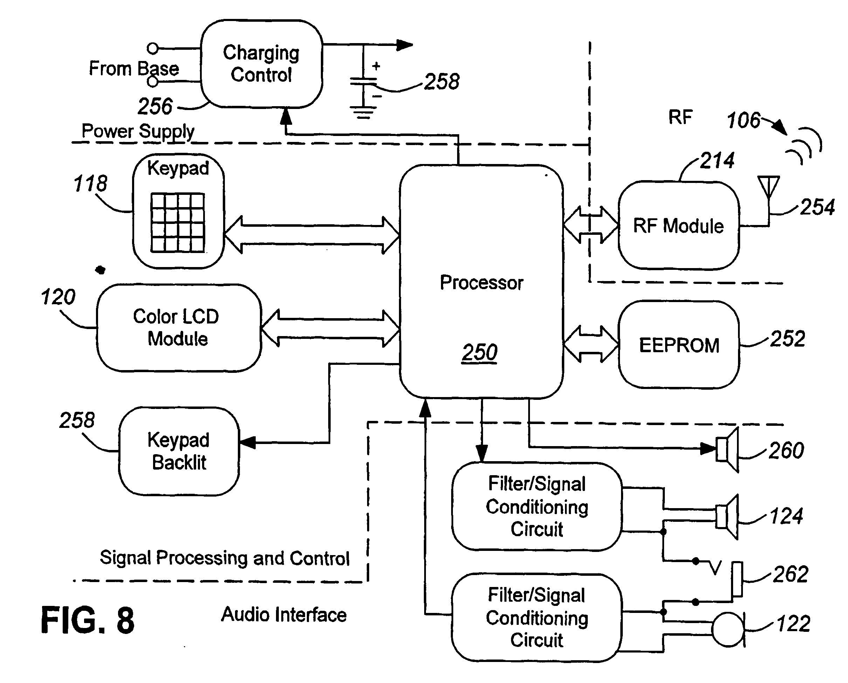

Figure 8 shows a functional block diagram of the components of the preferred embodiment of a handset constructed in accordance with the principals of the invention. The handset includes a base band processor 250 to provide a computing platform to execute the applications and functions described more fully with reference to Figure 4. Memory device 252 such as an Electrically Erasable Programmable Read Only Memory (EEPROM) is coupled to processor 250 and is used to store the software that operates the wireless handset. An RF interface module 214 is connected to the processor 250 and a handset antenna 254 to facilitate communication between the handset and the base over wireless channel 106. When the handset is positioned in the recharge station 102 a connection is established from the recharge station to the changing control centre 256 which recharges the handset battery 258 under control from the processor 250. Optionally the keypad 118 may be provided with a keypad backlight 258 which enables use of the handset keypad in darkened environments. Further, the handset may be provided with a hands free speaker 260 and a headset connector 262 to allow input and output of audio from the handset through additional elements apart from the ear piece 124 and microphone 122 conventionally provide on the handset.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A communications device for interaction with a soft phone application running on an internet interface device comprising a telephone style handset including a keypad and display for communication over a wireless channel with a base interface connectable to the internet interface device and for interaction with the soft phone application and to allow incoming audio to be played through an earpiece of the handset, and outgoing audio to be sent to the soft-phone application from a handset mouthpiece, the handset display for displaying a contact list produced by the soft-phone application.

2. The device of claim 1 wherein said internet interface device is a personal computer.

3. The device of claim 1 wherein said wireless channel is a radio frequency RF channel selected from at least one of a 900MHz, a 2.4 GHz and a 5.4GHz frequency band.

4. The device of claims 1, 2 and 3 wherein said base interface is connectable to the internet interface device over a wireline connection selected from at least one of a universal serial bus (USB) connection and an IEEE 1394 connection.

5. The device of claims 1, 2 and 3 wherein said soft phone application is selected from at least one of Skype (trademark), Yahoo Messenger (trademark) and MSN Messenger (trademark).

6. The device of claims 1, 2 and 3 further including a public switched telephone network PSTN connection in said base allowing the handset to be used for communication over the PSTN and said internet interface device.
